# DEMANDE DE BREVET EUROPEEN

(11) **EP 4 763 316 A1**
(43) Date de publication de la demande: **24.06.2026**
(21) Numéro de dépôt: 25224075.9
(22) Date de dépôt: 16.12.2025
(51) Int. Cl.: B01D 53/56, C01B 21/26, C01B 21/28, C01B 21/38

(54) **PROCEDE DE PRODUCTION D ACIDE NITRIQUE COMPRENANT UN TRAITEMENT CATALYTIQUE DU N2O DES GAZ DE QUEUE ET UNITE DE PRODUCTION D ACIDE NITRIQUE**

(30) Priorité: 19.12.2024 FR 2414761
(71) Demandeur: ENERCAT, 56270 Ploemeur (FR); Casale SA, 6900 Lugano (CH); Ecole Nationale Supérieure d'Ingénieurs de Caen, 14000 Caen (FR); Université de Caen Normandie, 14000 Caen (FR); Centre National de la Recherche Scientifique, 75016 Paris (FR)
(72) Inventeur: ROHART, Emmanuel, 56520 GUIDEL (FR); LAHOUGUE, Arnaud, 50500 CARENTAN-LES-MARAIS (FR); LALUC, Mathias, 14000 CAEN (FR); DATURI, Marco, 14610 EPRON (FR); BAZIN, Philippe, 14310 LONGVILLERS (FR); GARBUJO, Alberto, 22100 COMO (IT); BIASI, Pierdomenico, 22100 COMO (IT); OLDANI, Fabio, 21050 CANTELLO, VARESE (IT)
(74) Mandataire: Eveillard, Sophie

(57) **Abrégé**

L'invention vise un procédé de production d'acide nitrique comprenant au moins une étape de traitement d'un effluent gazeux contenant du N₂O, , ledit procédé comprenant au moins les étapes suivantes dans cet ordre:
-une étape lors de laquelle de l'éthanol est ajouté dans l'effluent gazeux;
-une étape de traitement de l'effluent gazeux qui est une étape de décomposition du N₂O sur un lit catalytique contenant au moins un catalyseur comprenant une zéolithe de type ferriérite échangée au fer, à une température inférieure à 400°C. l'invention concerne aussi une unité de production d'acide nitrique

## Description

### Domaine de l'invention

La présente invention concerne le domaine de la production d'acide nitrique et celui du traitement des gaz générés lors de la production d'acide nitrique. Plus particulièrement l'invention concerne la réduction des émissions de protoxyde d'azote (N₂O) présent dans les gaz de queue des unités de production d'acide nitrique.

### État de la technique

Le N₂O est un gaz à effet de serre à haut pouvoir radiatif dont le rôle sur la destruction de la couche d'ozone n'est plus à démontrer.

Le N₂O est notamment produit dans les unités de production d'acide nitrique lors de l'oxydation catalytique de l'ammoniac (NH3) en présence d'oxygène/d'air. Cette réaction génère également d'autres composés nocifs : les oxydes nitriques (NOx) qui, combinés avec de l'eau, sont à l'origine des pluies acides.

La réduction du N₂O et aussi des NOx est donc un problème de santé publique auquel les industriels restent confrontés.

Des solutions sont donc continuellement recherchées pour réduire les émissions de N₂O et de NOx. En particulier, il est connu de décomposer le N₂O en N₂ et O₂ selon un procédé nommé de-N₂O ci-dessous et de réduire les NOx en N₂ et H₂O selon un procédé nommé de-NOx ci-dessous.

Il demeure toujours un besoin d'avoir à disposition un procédé peu énergivore permettant un abattement significatif du N₂O à une température modérée.

La présente invention vise notamment à résoudre ce problème technique.

Plus particulièrement, la présente invention vise à réduire le N₂O formé dans les unités de production d'acide nitrique.

Les unités de production d'acide nitrique comprennent généralement les éléments suivants, placés dans le sens de circulation de l'effluent,
- un réacteur, dit de « catalyse primaire », pour l'oxydation catalytique de l'ammoniac (NH₃), dans lequel sont formés le N₂O et les NOx ;
- éventuellement un réacteur, dit de « catalyse secondaire », où a lieu une première décomposition catalytique du N₂O à haute température de l'ordre de 850 à 950°C,
- une tour d'absorption dans laquelle les oxydes nitriques NOx sont traités en présence d'eau pour produire de l'acide nitrique et un effluent gazeux nommé le « gaz de queue » comprenant du N₂O, le gaz de queue comprenant généralement toujours des oxydes nitriques NOx ;
- éventuellement une unité de traitement catalytique dit de « catalyse tertiaire » pour traiter le gaz de queue comprenant du N₂O et les NOx éventuellement présents.

En fonction des performances souhaitées, les unités de production d'acide nitrique comprennent un catalyseur secondaire, ou un catalyseur tertiaire ou les deux.

Les développements récents en relation avec cette technologie montrent que le N₂O est de plus en plus traité en catalyse tertiaire. Cependant beaucoup d'unités restent équipées uniquement d'un système secondaire permettant de traiter une grande partie du N₂O et d'un système tertiaire traitant uniquement les NOx.

La présente invention vise un procédé de production d'acide nitrique comprenant une étape de traitement du gaz de queue c'est-à-dire une étape de « catalyse tertiaire », elle vise aussi une unité de production d'acide nitrique.

Les procédés de décomposition du N₂O dans les gaz de queue sont généralement effectués au moyen de catalyseur (tertiaire) de type zéolithe, à températures relativement élevées (de l'ordre de 420 à 550°C).

La demande de brevet US 2013/0336872A1 divulgue un procédé pour préparer de l'acide nitrique ainsi qu'une unité de production d'acide nitrique comprenant l'agencement décrit ci-dessus. En particulier cette unité comprend un lit catalytique situé après la tour d'absorption des NOx, ce lit catalytique étant alimenté en un gaz réducteur. Même si l'utilisation d'hydrocarbures est mentionnée à titre de gaz réducteur, seul l'ammoniac est réellement utilisé dans les exemples.

### Brève description des figures

D'autres caractéristiques et avantages de l'invention ressortiront à la lecture de la description détaillée qui suit, en référence aux figures annexées :

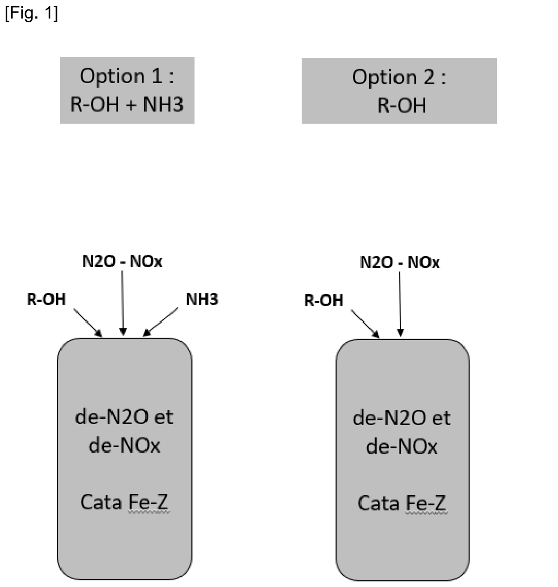

[Fig.1] présente deux procédés de catalyse tertiaire mettant en œuvre un seul lit catalytique contenant une zéolithe de type ferriérite échangée au fer. Ces procédés permettent à la fois de décomposer le N₂O et de réduire les NOx. Selon l'option 1, de l'ammoniac (NH3) et un alcool liquide en C₁-C₄ (noté R-OH) sont introduits, selon l'option 2, seulement un alcool liquide en C₁-C₄ (R-OH) est introduit.

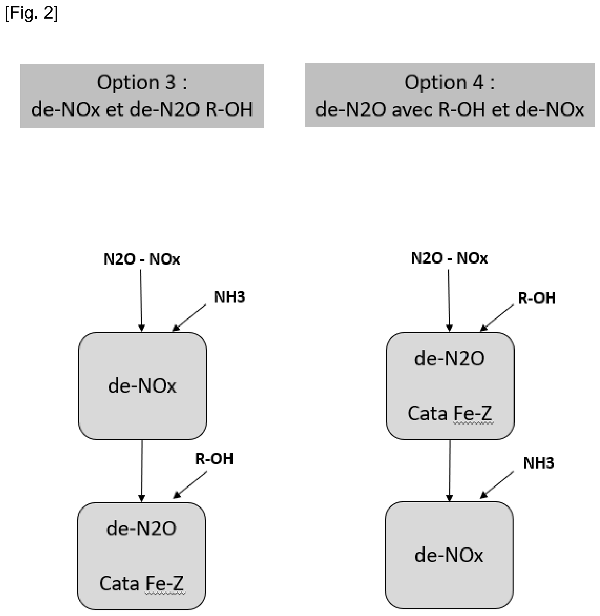

[Fig.2] présente deux procédés de catalyse tertiaire mettant en œuvre deux lits catalytiques. Selon l'option 3, le procédé comprend une étape d'introduction d'ammoniac suivie d'une étape de réduction des NOx puis une étape d'introduction d'un alcool liquide en C₁-C₄ (noté R-OH) suivie d'une étape de décomposition du N₂O sur un lit catalytique contenant une zéolithe de type ferriérite échangée au fer. Selon l'option 4, le procédé comprend une étape d'introduction d'alcool liquide en C₁-C₄ (noté R-OH) suivie d'une étape de décomposition du N₂O sur un lit catalytique contenant une zéolithe de type ferriérite échangée au fer puis une étape d'introduction d'ammoniac suivie d'une étape de réduction des NOx.

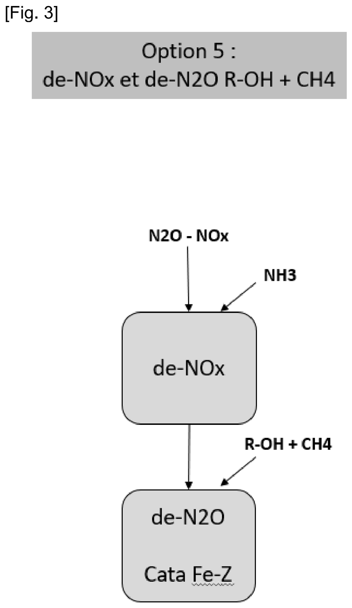

[Fig.3] présente l'option 5 correspondant à un procédé de catalyse tertiaire mettant en œuvre deux lits catalytiques. Ce procédé comprend une étape d'introduction d'ammoniac suivie d'une étape de réduction des NOx puis une étape d'introduction d'alcool liquide en C₁-C₄ (noté R-OH) et de méthane (CH₄) suivie d'une étape de décomposition du N₂O sur un lit catalytique contenant une zéolithe de type ferriérite échangée au fer.

Ce procédé et différents modes d'exécution sont maintenant décrits ci-dessous en référence aux figures 1 à 3.

### Définitions

Dans le présent texte :
- le terme « effluent gazeux » signifie l'effluent traité dans le procédé selon l'invention;
- les termes « en amont » et « en aval » sont à considérer par rapport au sens de circulation de l'effluent ;
- l'expression « catalyseur secondaire » signifie que le catalyseur est situé avant la tour d'absorption des oxydes nitriques NOx et l'expression « catalyseur tertiaire » signifie que le catalyseur est situé après la tour d'absorption des oxydes nitriques NOx.

### Description détaillée de l'invention

Selon un premier aspect, l'invention concerne un procédé de production d'acide nitrique comprenant au moins une étape de traitement d'un effluent gazeux contenant du N₂O, qui est de préférence un gaz de queue, ledit procédé comprenant au moins les étapes suivantes dans cet ordre :
- une étape lors de laquelle au moins un alcool liquide en C₁-C₄, de préférence l'éthanol, est ajouté dans l'effluent gazeux ;
- une étape de traitement de l'effluent gazeux qui est une étape de décomposition du N₂O sur un lit catalytique contenant au moins un catalyseur comprenant une zéolithe de type ferriérite échangée au fer, à une température inférieure à 400°C, de préférence inférieure à 380°C.

De préférence, l'étape de décomposition du N₂O est effectuée à une température allant de 300 à 400°C, de préférence de 350 à 380°C.

Avantageusement, l'alcool liquide en C₁-C₄ est ajouté dans l'effluent gazeux en une quantité telle que le ratio molaire alcool en C₁-C₄/N₂O va de 1 à 2.

Selon un premier mode préféré, le procédé selon l'invention comprend une étape lors de laquelle du méthane est ajouté dans l'effluent gazeux avant l'étape de décomposition du N₂O.

Selon ce premier mode préféré, le méthane et l'alcool liquide en C₁-C₄ peuvent être ajoutés lors de deux étapes distinctes ou lors de la même étape.

Avantageusement, le méthane et l'alcool liquide en C₁-C₄ sont ajoutés lors de la même étape c'est-à-dire que l'étape d'ajout d'au moins un alcool liquide en C₁-C₄ comprend également un ajout de méthane, de préférence cette étape comprend l'ajout d'éthanol et de méthane.

En particulier, le procédé selon l'invention est un procédé dans lequel l'effluent gazeux comprend aussi des oxydes nitriques NOx, ledit procédé comprenant alors une étape de réduction des oxydes nitriques NOx.

Un tel procédé, sans ajout d'ammoniac est notamment présenté à l'option 2 de la figure 1.

Selon un deuxième mode préféré, le procédé selon l'invention comprend une étape lors de laquelle de l'ammoniac est ajouté dans l'effluent gazeux avant l'étape de réduction des oxydes nitriques NOx.

Ce deuxième mode préféré correspond à option 1 de la figure 1, aux options 3 et 4 de la figure 2 et à option 5 de la figure 3.

Selon ce deuxième mode préféré, l'ammoniac et l'alcool liquide en C₁-C₄ peuvent être ajoutés lors de deux étapes distinctes ou lors de la même étape.

Avantageusement, l'ammoniac et l'alcool liquide en C₁-C₄ sont ajoutés lors de la même étape c'est-à-dire que l'étape d'ajout d'au moins un alcool liquide en C₁-C₄ comprend aussi un ajout d'ammoniac, de préférence cette étape comprend l'ajout d'éthanol et d'ammoniac.

Selon un troisième mode préféré, le procédé de traitement selon l'invention comprend une ou plusieurs étape(s) lors de laquelle/desquelles de l'ammoniac et du méthane sont ajoutés dans l'effluent gazeux avant l'étape de décomposition du N₂O.

Ce troisième mode préféré correspond à l'option 5 de la figure 3

Selon une première alternative, le procédé selon l'invention est un procédé dans lequel l'effluent gazeux comprend aussi des oxydes nitriques NOx, ledit procédé comprenant au moins les étapes suivantes, dans cet ordre:
- une étape lors de laquelle de l'ammoniac est ajouté dans l'effluent gazeux ;
- une étape de réduction des oxydes nitriques NOx ;
- une étape lors de laquelle au moins un alcool liquide en C₁-C₄, de préférence l'éthanol, est ajouté dans l'effluent gazeux issu de l'étape précédente;
- une étape de décomposition du N₂O sur un lit catalytique contenant au moins
un catalyseur comprenant une zéolithe de type ferriérite échangée au fer à une température inférieure à 400°C, de préférence inférieur à 380°C.

Cette première alternative correspond aux options 3 et 5 de la figure 2.

Selon une deuxième alternative, le procédé selon l'invention est un procédé dans lequel l'effluent gazeux comprend aussi des oxydes nitriques NOx, ledit procédé comprenant au moins les étapes suivantes, dans cet ordre:
- une étape lors de laquelle au moins un alcool liquide en C₁-C₄, de préférence l'éthanol, est ajouté dans l'effluent gazeux ;
- une étape de décomposition du N₂O sur un lit catalytique contenant au moins un catalyseur comprenant une zéolithe de type ferriérite échangée au fer à une température inférieure à 400°C, de préférence inférieur à 380°C ;
- une étape lors de laquelle de l'ammoniac est ajouté dans l'effluent gazeux issu de l'étape précédente;
- une étape de réduction des oxydes nitriques NOx.

Avantageusement, le ratio molaire NH₃/NOx va de 1 à 1,3.

Cette deuxième alternative correspond à l'option 4 de la figure 2.

Avantageusement dans le procédé comprenant une étape lors de laquelle de l'ammoniac est ajouté dans l'effluent gazeux, du méthane est également ajouté dans l'effluent gazeux lors de l'étape d'ajout d'au moins un alcool liquide en C₁-C₄, de préférence l'éthanol.

En particulier, le procédé selon l'invention est précédé des étapes suivantes, dans cet ordre :
- une étape d'oxydation catalytique de l'ammoniac sur toile de platine (catalyse primaire) ;
- éventuellement une étape de décomposition, sur un lit catalytique, du N₂O produit lors de l'étape d'oxydation catalytique de l'ammoniac (catalyse secondaire) ;
- une étape d'absorption des oxydes nitriques NOx produits lors de l'étape d'oxydation catalytique de l'ammoniac dans une tour d'absorption.

Un avantage du procédé selon la présente invention est qu'il est mis en oeuvre à des températures plus basses que les procédés de l'art antérieur. Le procédé selon la présente invention est mis en œuvre à une température inférieure à 400°C, de préférence inférieure à 380°C. De préférence, le procédé de de-N₂O selon la présente invention est mis en œuvre à une température d'au moins 350°C. En conséquence le catalyseur, soumis à des températures moins élevées, est plus stable et subit une moindre détérioration dans le temps.

Le procédé selon la présente invention est également plus économique en énergie ce qui le rend aussi moins coûteux.

Avantageusement, le procédé selon la présente invention est mis en œuvre à une pression allant de la pression atmosphérique à 15 bara.

Avantageusement, le procédé selon la présente invention est mis en œuvre à une vitesse spatiale allant de 3000 h-1 à 30000 h-1.

Généralement, les gaz de queue présentent une teneur en N₂O allant de 100 à 3000 ppm et une teneur en NOx allant de 100 à 2000.

Le procédé de traitement d'un effluent gazeux selon la présente invention est effectué dans un dispositif comprenant un ou au moins deux lits catalytiques.

Le catalyseur de décomposition de N₂O, comprenant une zéolithe type ferriérite échangée au fer est une zéolithe de type ferriérite, sous forme initiale Na et K échangée à l'ammonium et finalement échangée au fer, telle que : i) le taux en poids dudit fer varie de 0,1 à 2 %, de préférence de 0,4 à 1,8 % et plus préférentiellement de 0,5 à 1,2 % par rapport au poids de la zéolithe, ii) le taux de sodium est inférieur à 0,1 % et le taux de potassium inférieur à 0,7 %, de préférence inférieur à 0,5 % et plus particulièrement inférieur à 0> 1 % en poids par rapport au poids de la zéolithe.

La zéolithe de type ferriérite, utilisable dans la présente invention, a un rapport Si/Al atomique allant de 8 à 20 plus préférentiellement de 8 à 10.

Une zéolithe type ferriérite de départ, utilisable dans l'invention, a un rapport de 8,75 selon la formule suivante, compte tenu des teneurs en Na de 0,89 % et K de 4,8 % (produit sec sans H2O) : Na_{0,24}K_{0,76}AlO_{28,75}SiO2.

La zéolithe (ferriérite/fer) du catalyseur selon l'invention peut être obtenue par un procédé comprenant les étapes suivantes: échange des ions sodium et potassium sur la zéolithe agglomérée, par un sel d'ammonium, de préférence le sulfate ou nitrate d'ammonium, pour remplacer les ions Na+ et K+ par des ions NH4+ , échange au moins partiel desdits ions ammonium par un sel de fer, de préférence le sulfate de fer, ledit sel de fer et de préférence sulfate de fer, ayant de préférence un taux d'impuretés de moins de 0,5 %.

### Dispositif

Selon un deuxième aspect, l'invention concerne une unité, ou installation, de production d'acide nitrique comprenant au moins un réacteur, dit réacteur de catalyseur tertiaire, de traitement d'un effluent gazeux comprenant du N₂O.

Ainsi, l'unité de production d'acide nitrique selon la présente invention comprend les éléments suivants, placés dans le sens de circulation de l'effluent gazeux,
- un réacteur, dit réacteur de catalyse primaire, pour l'oxydation catalytique de l'ammoniac dans lequel sont formés des oxydes nitriques NOx et du N₂O ;
- éventuellement un réacteur, dit réacteur de catalyse secondaire, pour la décomposition catalytique du N₂O ;
- une tour d'absorption dans laquelle les oxydes nitriques NOx sont traités en présence d'eau pour produire de l'acide nitrique et un effluent qui est un gaz de queue comprenant des oxydes nitriques NOx et du N₂O ;
- un dispositif permettant l'introduction d'au moins un alcool liquide en C₁-C₄, de préférence l'éthanol, dans l'effluent gazeux,
- au moins un réacteur, dit réacteur de catalyse tertiaire, dans lequel l'effluent est traité, ledit au moins un réacteur comprenant au moins un lit catalytique contenant au moins un catalyseur de décomposition du N₂O comprenant une zéolithe de type ferriérite échangée au fer.

Le dispositif, positionné en amont du lit catalytique, permettant l'introduction d'au moins un alcool liquide en C1-C4, de préférence l'éthanol, dans l'effluent gazeux peut aussi permettre l'introduction de méthane et/ou d'ammoniac dans l'effluent gazeux.

Selon une première alternative, l'unité de production d'acide nitrique selon l'invention comprend un seul lit catalytique ledit lit catalytique contenant au moins un catalyseur de décomposition du N₂O comprenant une zéolithe de type ferriérite échangée au fer. Cette technologie est classiquement appelée « single bed ».

Cette première alternative est illustrée dans la figure 1 avec ajout d'un alcool liquide en C1-C4 et d'ammoniac dans l'option 1 et avec ajout d'un alcool liquide en C1-C4 dans l'option 2.

Selon une deuxième alternative, l'unité de production d'acide nitrique selon l'invention comprend deux lits catalytiques distincts, au moins un des lits catalytiques contient un catalyseur de décomposition du N₂O comprenant une zéolithe de type ferriérite échangée au fer. Cette technologie est classiquement appelée « dual bed».

Cette unité comprend aussi un dispositif, positionné en amont du lit catalytique, permettant l'introduction d'au moins un alcool liquide en C1-C4, de préférence l'éthanol, dans l'effluent gazeux.

L'autre lit catalytique contient un catalyseur apte à la réduction des NOx, le catalyseur utilisé est une zéolithe de type ferriérite échangée au fer ou un catalyseur différent d'une zéolithe de type ferriérite échangée au fer. Selon cette deuxième alternative, l'unité de production d'acide nitrique selon l'invention comprend aussi un dispositif, positionné en amont du lit catalytique, permettant l'introduction d'ammoniac.

Par « lits catalytiques distincts » on entend que les lits catalytiques sont physiquement distincts, par contre ils peuvent contenir des catalyseurs de même nature c'est-à-dire une zéolithe de type ferriérite échangée au fer.

En outre les deux lits catalytiques peuvent être positionnés dans le même réacteur ou dans deux réacteurs différents.

Selon un premier mode de cette deuxième alternative, le lit catalytique apte à décomposer le N₂O comprenant une zéolithe de type ferriérite échangée au fer et le dispositif, positionné en amont dudit lit catalytique, permettant l'introduction d'au moins un alcool liquide en C1-C4, de préférence l'éthanol, dans l'effluent gazeux sont positionnés avant le lit catalytique contenant le catalyseur apte à la réduction des NOx, dans le sens de circulation de l'effluent.

Ce premier mode correspond à l'option 4 de la figure 2.

Selon un deuxième mode de cette deuxième alternative, le lit catalytique apte à décomposer le N₂O comprenant une zéolithe de type ferriérite échangée au fer et le dispositif, positionné en amont dudit lit catalytique, permettant l'introduction d'au moins un alcool liquide en C1-C4, de préférence l'éthanol, dans l'effluent gazeux sont positionnés après le lit catalytique contenant le catalyseur apte à la réduction des NOx, dans le sens de circulation de l'effluent.

Ce deuxième mode est illustré dans la figure 2 avec ajout d'éthanol seul dans l'option 3 et avec ajout d'éthanol et de méthane dans l'option 5.

Dans ce mode, avantageusement, le dispositif, permettant l'introduction d'au moins un alcool liquide en C₁-C₄, dans l'effluent gazeux est positionné en aval du lit catalytique contenant le catalyseur apte à la réduction des NOx.

Comme déjà mentionné, la présente invention concerne plus spécifiquement un procédé et une unité de traitement des gaz de queue des unités de production d'acide nitrique destinés à être mis en œuvre après la tour d'absorption des NOx c'est-à-dire un procédé et une unité mettant en œuvre un procédé et un réacteur de type « catalyse tertiaire ».

En fonction des performances souhaitées, les unités de production d'acide nitrique selon l'invention comprennent soit uniquement un catalyseur tertiaire soit un catalyseur secondaire et un catalyseur tertiaire.

L'unité comprenant le catalyseur tertiaire est nommée l'unité tertiaire dans la suite du présent texte.

Dans l'unité tertiaire, l'étape de décomposition du N₂O est effectuée à une température inférieure à 400°C.

Dans les unités de production d'acide nitrique selon l'invention, le catalyseur primaire est classiquement une toile de platine. Ce catalyseur primaire permet l'oxydation catalytique de NH₃ en présence d'oxygène, généralement l'oxygène de l'air. Lors de cette réaction, des oxydes nitriques NOx et du N₂O sont produits. En sortie du catalyseur primaire, la teneur en N2O de l'effluent est de l'ordre de 1000 à 2000 ppm et celle des NOx de 5 à 10%.

Dans les unités de production d'acide nitrique selon l'invention, la catalyse secondaire est effectuée au moyen de tout catalyseur de décomposition catalytique du N₂O adapté. Plus particulièrement, les catalyseurs de catalyse secondaires sont composés de Fe et/ou de Co, supporté(s) sur des oxydes métalliques notamment des oxydes de terres rares. Les températures de fonctionnement de ces catalyseurs vont de 800 à 900°C.

Dans la tour d'absorption, de l'acide nitrique est produit par la réaction des oxydes nitriques NOx avec de l'eau. Le « gaz de queue » comprend du N₂O et également les NOx qui n'ont pas réagi dans la tour d'absorption.

Dans les unités de production d'acide nitrique selon l'invention, la catalyse tertiaire est effectuée dans l'unité tertiaire avec au moins un catalyseur comprenant une zéolithe de type ferriérite échangée au fer.

Les exemples qui suivent illustrent l'invention sans en limiter la portée.

Les exemples ont été réalisés sur un banc de gaz synthétiques dans un réacteur permettant de simuler les conditions de catalyse tertiaire comprenant soit un seul lit catalytique (options 1 et 2) soit deux lits catalytiques distincts (options 3 à 5).

### Exemples

Les exemples conformes à l'invention et comparatifs suivant ont été réalisés en utilisant un catalyseur tertiaire de type zéolite ferriérite échangée au fer commercialisée par la société Enercat. Pour chacun de ces exemples les spécificités du gaz de queue utilisé sont précisées.

### Exemple 1 : Effet de l'éthanol (600 ppm ) sur l'activité DeN2O à 380°C

Le procédé selon l'invention a été mis en œuvre dans les conditions opératoires suivantes :
Réacteur tubulaire de diamètre 25 10⁻³ m, avec un catalyseur sous forme d'extrudés de diamètre 1,8 10⁻³ m et un volume de catalyseur de 2,5 10⁻ 5 m³.
P : 7 10⁵ Pa
T° : 380°C
Vitesse de l'effluent 15000 h-1
N₂O : 0,12%
EtOH : 0,06%
H2O : 0,4%
O2 : 3%

### Dans ces conditions, la conversion du N2O atteint 95%

### Exemple 2 : Effet de l'éthanol (1200 ppm ) sur l'activité DeN2O à 350°C

Le procédé selon l'invention a été mis en œuvre dans les conditions opératoires suivantes :
Réacteur tubulaire de diamètre 25 10⁻³ m, avec un catalyseur sous forme d'extrudés de diamètre 1,8 10⁻³ m et un volume de catalyseur de 2,5 10⁻ 5 m³.
P : 7 10⁵Pa
T° : 350°C
Vitesse de l'effluent 10000 h-1
N₂O : 0,12%
EtOH : 0,12%
H2O : 0,4%
O2 : 3%

### Dans ces conditions, la conversion du N2O atteint 90,2%

### Exemple 3 : Effet de l'éthanol (1800 ppm ) sur l'activité DeN2O, en présence de NOx, à 380°C

Le procédé selon l'invention a été mis en œuvre dans les conditions opératoires suivantes :
Réacteur tubulaire de diamètre 25 10⁻³ m, avec un catalyseur sous forme d'extrudés de diamètre 1,8 10⁻³ m et un volume de catalyseur de 2,5 10⁻ 5 m³.
P : 7 10⁵ Pa
T° : 380°C
Vitesse de l'effluent 15000 h-1
N₂O : 0,12%
NOx : 0,035%
EtOH : 0,18%
H2O : 0,4%
O2 : 3%

### Dans ces conditions, la conversion du N2O atteint 95,1%

### Exemple 4 : Effet de l'éthanol (1200 ppm ) sur l'activité DeN2O, en présence de NOx, à 350°C

Le procédé selon l'invention a été mis en œuvre dans les conditions opératoires suivantes :
Réacteur tubulaire de diamètre 25 10⁻³ m, avec un catalyseur sous forme d'extrudés de diamètre 1,8 10⁻³ m et un volume de catalyseur de 2,5 10⁻ 5 m³.
P : 7 10⁵ Pa
T° : 350°C
Vitesse de l'effluent 10000 h-1
N₂O : 0,12%
NOx : 0,035% EtOH : 0,12%
H2O : 0,4%
O2 : 3%

### Dans ces conditions, la conversion du N2O atteint 70,7%

### Exemple 5 : Effet de l'éthanol (1200 ppm ) sur l'activité DeN2O, en présence de NOx, à 350°C

Le procédé selon l'invention a été mis en œuvre dans les conditions opératoires suivantes :
Réacteur tubulaire de diamètre 25 10⁻³ m, avec un catalyseur sous forme d'extrudés de diamètre 1,8 10⁻³ m et un volume de catalyseur de 2,5 10⁻ 5 m³.
P : 7 10⁵ Pa
T° : 350°C
Vitesse de l'effluent 10000 h-1
N₂O : 0,12%
NOx : 0,035%
EtOH : 0,12%
NH3 : 0,042%
H2O : 0,4%
O2 : 3%

### Dans ces conditions, la conversion du N2O atteint 85%

### Exemple 6 : Effet de l'éthanol (600 ppm ) sur l'activité DeN2O, en présence de NOx, à 380°C

Le procédé selon l'invention a été mis en œuvre dans les conditions opératoires suivantes :
Réacteur tubulaire de diamètre 25 10⁻³ m, avec un catalyseur sous forme d'extrudés de diamètre 1,8 10⁻³ m et un volume de catalyseur de 2,5 10⁻ 5 m³.
P : 7 10⁵ Pa
T° : 380°C
Vitesse de l'effluent 15000 h-1
N₂O : 0,12%
NOx : 0,035%
EtOH : 0,06%
NH3 : 0,0385%
H2O : 0,4%
O2 : 3%

### Dans ces conditions, la conversion du N2O atteint 94%

### Exemple 7 : Effet de l'éthanol (1200 ppm ) avec du méthane sur l'activité DeN2O à 350°C

Le procédé selon l'invention a été mis en œuvre dans les conditions opératoires suivantes :
Réacteur tubulaire de diamètre 25 10⁻³ m, avec un catalyseur sous forme d'extrudés de diamètre 1,8 10⁻³ m et un volume de catalyseur de 2,5 10⁻ 5 m³.
P : 7 10⁵ Pa
T° : 350°C
Vitesse de l'effluent 10000 h-1
N₂O : 0,12%
EtOH : 0,012%
CH4 : 0,48%
H2O : 0,4%
O2 : 3%

### Dans ces conditions, la conversion du N2O atteint 89,1%

### Exemples comparatifs

Les exemples comparatifs ont été réalisés en utilisant un catalyseur de type zéolite ferriérite échangée au fer commercialisée par la société Enercat.

### Exemple comparatif 1 : Avec introduction de méthane, sans introduction d'éthanol

L'exemple comparatif 1 a été mis en œuvre dans les conditions opératoires suivantes :
Réacteur tubulaire de diamètre 25 10⁻³ m, avec un catalyseur sous forme d'extrudés de diamètre 1,8 10⁻³ m et un volume de catalyseur de 2,5 10⁻ 5 m³.
P : 7 10⁵ Pa
T° : 350°C
Vitesse de l'effluent 10000 h-1
N₂O : 0,12%
NOx : 0,035%
CH4 : 0,12%
H2O : 0,4%
O2 : 3%

### Dans ces conditions, la conversion du N2O atteint 32%

L'exemple 4 mis en œuvre dans les mêmes conditions mais avec 1200 ppm d'éthanol à la place de 1200 ppm de méthane permet une conversion du N2O de 70,7%.

### Exemple comparatif 2 : Sans introduction d'éthanol

L'exemple comparatif 2 a été mis en œuvre dans les conditions opératoires suivantes :
Réacteur tubulaire de diamètre 25 10⁻³ m, avec un catalyseur sous forme d'extrudés de diamètre 1,8 10⁻³ m et un volume de catalyseur de 2,5 10⁻ 5 m³.
P : 710⁵ Pa
T° : 350°C
Vitesse de l'effluent 10000 h-1
N₂O : 0,12%
NOx : 0,035%H2O : 0,4%
O2 : 3%

### Dans ces conditions, la conversion du N2O atteint 30%.

L'exemple 4 mis en œuvre dans les mêmes conditions mais avec 1200 ppm d'éthanol permet une conversion du N2O de 70,7%.

## Revendications

1. Procédé de production d'acide nitrique comprenant au moins une étape de traitement d'un effluent gazeux contenant du N₂O, ledit procédé comprenant au moins les étapes suivantes dans cet ordre :
- une étape lors de laquelle au moins un alcool liquide en C₁-C₄, de préférence l'éthanol, est ajouté dans l'effluent gazeux;
- une étape de traitement de l'effluent gazeux qui est une étape de décomposition du N₂O sur un lit catalytique contenant au moins un catalyseur comprenant une zéolithe de type ferriérite échangée au fer, à une température inférieure à 400°C, de préférence inférieure à 380°C.

2. Procédé selon la revendication 1 comprenant une étape lors de laquelle du méthane est ajouté dans l'effluent gazeux avant l'étape de décomposition du N₂O.

3. Procédé selon l'une quelconque des revendications 1 ou 2 dans lequel l'effluent gazeux comprend aussi des oxydes nitriques NOx, ledit procédé comprenant alors une étape de réduction des oxydes nitriques NOx.

4. Procédé selon la revendication 3 comprenant une étape lors de laquelle de l'ammoniac est ajouté dans l'effluent gazeux avant l'étape de réduction des oxydes nitriques NOx.

5. Procédé selon l'une quelconque des revendications 1 à 4 dans lequel l'effluent gazeux comprend aussi des oxydes nitriques NOx, ledit procédé comprenant au moins les étapes suivantes, dans cet ordre:
- une étape lors de laquelle de l'ammoniac est ajouté dans l'effluent gazeux ;
- une étape de réduction des oxydes nitriques NOx ;
- une étape lors de laquelle au moins un alcool liquide en C₁-C₄, de préférence l'éthanol, est ajouté dans l'effluent gazeux issu de l'étape précédente ;
- une étape de décomposition du N₂O sur un lit catalytique contenant au moins un catalyseur comprenant une zéolithe de type ferriérite échangée au fer à une température inférieure à 400°C, de préférence inférieur à 380°C.

6. Procédé selon l'une quelconque des revendications 1 à 4 dans lequel l'effluent gazeux comprend aussi des oxydes nitriques NOx, ledit procédé comprenant au moins les étapes suivantes, dans cet ordre:
- une étape lors de laquelle au moins un alcool liquide en C₁-C₄, de préférence l'éthanol, est ajouté dans l'effluent gazeux ;
- une étape de décomposition du N₂O sur un lit catalytique contenant au moins un catalyseur comprenant une zéolithe de type ferriérite échangée au fer à une température inférieure à 400°C, de préférence inférieur à 380°C ;
- une étape lors de laquelle de l'ammoniac est ajouté dans l'effluent gazeux issu de l'étape précédente ;
- une étape de réduction des oxydes nitriques NOx.

7. Procédé selon l'une quelconque des revendications 4 à 6 dans lequel du méthane est également ajouté dans l'effluent gazeux lors de l'étape d'ajout d'au moins un alcool liquide en C₁-C₄, de préférence l'éthanol.

8. Procédé selon l'une quelconque des revendications précédentes dans ledit procédé est précédé des étapes suivantes, dans cet ordre : une étape d'oxydation catalytique de l'ammoniac sur toile de platine ; éventuellement une étape de décomposition, sur un lit catalytique, du N₂O produit lors de l'étape d'oxydation catalytique de l'ammoniac ; une étape d'absorption des oxydes nitriques NOx produits lors de l'étape d'oxydation catalytique de l'ammoniac dans une tour d'absorption.

9. Unité de production d'acide nitrique comprenant les éléments suivants, placés dans le sens de circulation de l'effluent gazeux,
- un réacteur, dit réacteur de catalyse primaire, pour l'oxydation catalytique de l'ammoniac dans lequel sont formés des oxydes nitriques NOx et du N₂O ;
- éventuellement un réacteur, dit réacteur de catalyse secondaire, pour la décomposition catalytique du N₂O ;
- une tour d'absorption dans laquelle les oxydes nitriques NOx sont traités en présence d'eau pour produire de l'acide nitrique et un effluent qui est un gaz de queue comprenant des oxydes nitriques NOx et du N₂O ;
- un dispositif permettant l'introduction d'au moins un alcool liquide en C₁-C₄, de préférence l'éthanol, dans l'effluent gazeux.
- au moins un réacteur, dit réacteur de catalyse tertiaire, dans lequel l'effluent est traité, ledit au moins un réacteur comprenant au moins un lit catalytique contenant au moins un catalyseur de décomposition du N₂O comprenant une zéolithe de type ferriérite échangée au fer.

10. Unité selon la revendication 9 comprenant un seul lit catalytique, ledit lit catalytique contenant au moins un catalyseur de décomposition du N₂O comprenant une zéolithe de type ferriérite échangée au fer.

11. Unité selon la revendication 9 comprenant deux lits catalytiques distincts, au moins des lits catalytiques contenant un catalyseur de décomposition du N₂O comprenant une zéolithe de type ferriérite échangée au fer.
